(19) Europäisches Patentamt
European Patent Office
Office européen des brevets

(11) Numéro de publication: **0 217 437**
**A1**

(12) **DEMANDE DE BREVET EUROPEEN**

(21) Numéro de dépôt: 86201521.1

(22) Date de dépôt: 04.09.86

(51) Int.Cl.⁴: **B 01 D 53/34**

(30) Priorité: 04.09.85 FR 8513146

(43) Date de publication de la demande: 08.04.87 Bulletin 87/15

(84) Etats contractants désignés: BE CH DE FR GB IT LI NL SE

(71) Demandeur: N.V. BEKAERT S.A.
Bekaertstraat 2
B-8550 Zwevegem(BE)

(72) Inventeur: Dyens, Jacques-Pierre
19, rue de Robaresses
F-78570 Andresy(FR)

(74) Mandataire: Ryckeboer, Leo et al,
c/o N.V. BEKAERT S.A. Department Industrial Property
Leo Bekaertstraat 2
B-8550 Zwevegem(BE)

(54) **Procédé et dispositif d'élimination par voie humide des oxydes d'azote d'un effluent gazeux.**

(57) Procédé et dispositif de traitement d'effluents gazeux contenant des oxydes d'azote comprenant une opération de lavage acide contenant de l'urée dans un laveur (9) suivie d'une opération de lavage alcalin dans un laveur (10) en vue d'éliminer ces oxydes d'azote de l'effluent. Les liquides résiduaires sont collectés et recirculés à partir des cuves (2, resp. 8) et peuvent être mélangés dans un récipient (18) en fin d'opération en vue de leur neutralisation.

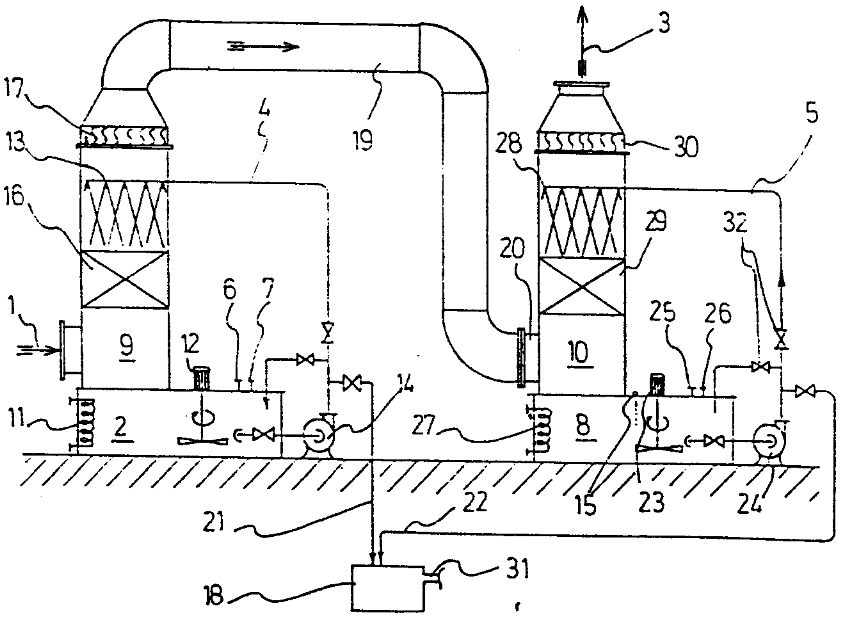


EP 0 217 437 A1

Croydon Printing Company Ltd.

*PROCEDE ET DISPOSITIF D'ELIMINATION PAR VOIE HUMIDE DES OXYDES D'AZOTE D'UN EFFLUENT GAZEUX*

La présente invention a trait à l'épuration des effluents gazeux contenant des oxydes d'azote. En particulier elle se rapporte à l'élimination de ces oxydes d'azote de l'effluent par voie humide. On récupère ce type d'effluents p.ex. dans la fabrication d'acide nitrique, au cours des réactions de nitruration, dans l'industrie des engrais, dans le domaine de l'hydrométallurgie et dans le domaine du traitement de surfaces (décapage des aciers, de l'aluminium, du titane, bains de passivation, de métallisation, etc.).

Des oxydes d'azote gazeux sont produits dans de nombreux procédés de fabrication ou de traitement de produits ou de matériaux où interviennent des réactions chimiques. Ils sont considérés comme des polluants importants de l'atmosphère. Généralement, on rencontre un mélange de $NO$ et $NO_2$ se caractérisant par des vapeurs rousses plus ou moins abondantes. Ces deux corps chimiques peuvent se recombiner pour donner d'autres oxydes d'azote en fonction des températures. Les méthodes permettant de récupérer de l'acide nitrique à partir des sources polluantes, contenant des oxydes d'azote, sont généralement consommatrices de quantités considérables d'énergie et/ou de catalyseurs, donc onéreuses. Dès lors ils ne peuvent être utilisés économiquement que lorsque les vapeurs nitreuses sont concentrées et ne sont pas mêlées à certains autres composés chimiques. Souvent il est donc illusoire dans la pratique de vouloir récupérer de l'acide nitrique des effluents. La seule solution qui reste alors pour contrôler la pollution atmosphérique par des oxydes d'azote impose un traitement d'épuration des effluents sans récupération d'acide nitrique.

L'objet de l'invention est donc de fournir un système, c.à.d. un procédé et un dispositif permettant l'élimination

peu onéreuse et simple des oxydes d'azote d'effluents gazeux, plus particulièrement des $NO_2$. L'invention permet ainsi de contrôler d'une façon simple, économique et peu onéreuse comparée aux techniques habituelles la pollution atmosphérique provoquée par des effluents gazeux contenant des oxydes d'azote.

Le procédé de traitement des effluents gazeux saturés ou non en humidité, contenant les oxydes d'azote est caractérisé en ce qu'il comprend une première opération dans laquelle une très grande partie des oxydes de l'azote (en particulier $NO_2$) est transformée lors d'un lavage en milieu acide et grâce à l'adjonction d'urée à une température comprise entre 30° et 60°C, en produits non agressifs suivant les réactions:

$NO + NO_2 + H_2O \rightarrow 2\ HNO_2$

$NH_2 - CO - NH_2 + 2\ HNO_2 \rightarrow 2\ N_2 + 2\ H_2O + H_2CO_3$

$H_2CO_3 \rightarrow CO_2 + H_2O.$

Si au départ, les effluents gazeux sont secs, le lavage acide peut permettre la saturation des effluents gazeux en humidité.

Dans une seconde opération, les effluents gazeux provenant de la première opération sont soumis à un lavage à l'aide d'une solution alcaline afin de neutraliser les acides entraînés par eux à la sortie de la première opération. La consommation de liquide alcalin est en général d'autant plus faible que la première opération et efficace.

Afin de résoudre en même temps le problème de neutralisation des liquides de lavage évacués respectivement de la première et de la deuxième opération, ces liquides peuvent être mélangés, p.ex. en fin d'opération. Le pH du mélange est alors ajusté à la valeur légalement admissible. Si nécessaire on ajoute un agent oxydant, p.ex. de l'eau oxygénée afin de transformer les nitrites, qui se sont

éventuellement formées dans la seconde opération, en nitrates. Le contrôle du potentiel d'oxydo-réduction peut être suivi alors au moyen d'un rH-mètre. Le procédé selon l'invention peut être appliqué en continu ou en discontinu.

L'invention se rapporte aussi à un dispositif d'élimination des oxydes d'azote d'un effluent gazeux. En particulier ce dispositif est apte et utile pour la mise-en-oeuvre du procédé décrit ci-dessus. Le système d'élimination des oxydes d'azote et son mode d'opération sera décrit maintenant en regard du dessin annexé qui représente une forme d'exécution de l'invention. Des caractéristiques et avantages supplémentaires de l'invention sortiront de la description de cette forme d'exécution, et de son fonctionnement.

Le dispositif comprend en fait un premier appareil laveur 9 pourvu d'une entrée 1 pour l'effluent gazeux à traiter et des moyens d'alimentation 4 et de distribution 13 d'un liquide de lavage acide contenant de l'urée. Le liquide de lavage, après avoir été mis en contact avec l'effluent gazeux est évacué du laveur 9 et collecté dans une cuve 2 tandis que le gaz traité est évacué du laveur 9 par une conduite 19. A son tour, cette conduite 19 d'évacuation du gaz traité est reliée à une entrée 20 d'un second appareil laveur 10 qui comprend un moyen d'alimentation 5 et de distribution 28 d'un liquide de lavage alcalin. Après la mise en contact de la phase liquide alcaline et de la phase gazeuse, le gaz épuré est évacué à travers la sortie 3 tandis que le liquide de lavage est transféré de l'appareil 10 à la cuve 8 de collection et de régénération. La cuve 8 est en général équipée de moyens de conditionnement de la composition et de la température du bain alcalin, notamment d'une entrée 25 pour l'adjonction d'eau et d'une entrée 26

pour l'adjonction d'une solution alcaline, ainsi que d'une système d'agitation 23, d'un mètre pH 15 pour surveiller la consommation de produit alcalin et éventuellement d'un échangeur de chaleur 27 afin d'éviter la formation de gels dans le bain 8. Enfin la cuve 8 est reliée aux moyens 5 d'alimentation de la solution alcaline par l'intermédiaire d'une pompe de recirculation 24. Des robinets 32 sont aménagés pour régler à besoin le débit du liquide de lavage.

L'effluent gazeux 1 qui entre dans le laveur 9 peut être mis en contact avec la solution acide à co- ou contre-courant. Afin d'intensifier ou d'activer le contact et l'échange entre la phase liquide et gazeuse on peut aménager dans la colonne de lavage 9 une section de garnissage 16 d'un type quelconque connu en soi et comprenant p.ex. un lit, d'anneaux Berl, Raschig, Pall ou autre comme corps de remplissage. Alternativement, on peut utiliser des colonnes du type à pulvérisation, à plateaux, à calottes ou tout autre contacteur, comme éjecteur à jet liquide etc. Après que le gaz a traversé le lit 16, il passe de préférence par un séparateur de gouttes 17 afin de réduire la proportion de liquide entraîné par la phase gazeuse sortant du lit 16. Le séparateur 17 peut comprendre p.ex. des séparateurs à lamelles ou à tissus.

La solution acide contenant l'urée est amené à une température de 30° à 60°C par une conduite 4 à des moyens de distribution 13 et pulvérisée, arrosée ou déversée par débordement ou par tout autre moyen sur le gaz de façon à assurer un bon contact ce qui produit une très intense absorption des vapeurs nitreuses. L'acide présente en général une concentration relativement forte comprise entre 5 et 15 % en poids, p.ex. entre 5 et 10 % en poids et peut comprendre soit un acide organique, soit de l'acide nitrique, chlorhydrique ou autre à condition que le pH soit

*compris entre 0 et 1,5, p.ex. entre 0,5 et 1. On ajoute à cette solution 50 à 500 g/l d'urée, soit sous forme solide, soit sous forme liquide.*

*Le liquide de lavage acide est circulée et recirculée en fait au moyen d'une pompe 14 à partir d'une cuve de conditionnement 2. L'adjonction d'urée peut se faire par l'entrée 6 et celui de l'eau par l'entrée 7.*

*En effet, on peut assister à une évaporation d'eau par la saturation adiabatique des gaz à épurer. Il convient de contrôler périodiquement la concentration en urée du liquide 4 à circuler pour l'ajuster aux quantités indiquées ci-dessus. Après le démarrage, il est inutile, en principe d'ajouter de l'acide dans ce premier étage. Un agitateur 12 peut être prévu pour assurer une bonne homogénéité de la solution et un système de réchauffage 11 permet de maintenir en température désirée le volume liquide.*

*Le gaz ayant passé la première opération de lavage peut contenir encore des gouttes très fines acides qui doivent être neutralisées et éliminées avant que l'effluent gazeux s'échappe dans l'air. Le courant de gaz sortant du laveur 9 est donc transféré ensuite par la conduite 19 vers l'entrée 20 d'un second appareil de lavage et de neutralisation 10 qui peut être réalisé et fonctionner selon le même principe que le premier laveur 9. Le contact devra donc s'effectuer ici entre l'effluent gazeux et le liquide de lavage 5 qui est une solution alcaline dont le pH se situe entre 11 et 14, de préférence entre 12 et 14. L'agent alcalin peut être l'hydroxyde de sodium. Pour un pH de 13 à 14, la concentration s'élève de 5 % à 15 % en poids. Comme pour ce qui a été décrit ci-dessus pour l'opération de lavage*

acide dans la colonne 9, le gaz est mis en contact dans le laveur 10 à co- ou contre-courant avec le liquide alcalin qui est amené par la conduite 5 et distribué par des moyens de distribution (pulvérisation, arrosage, déversement, jet de liquide ou autre). Le contact gaz/liquide peut également être intensifié en faisant passer le gaz à travers une section de garnissage 29 aménagée dans le laveur 10. Ce garnissage peut alors comprendre un lit d'anneaux de remplissage ou tout autre moyen permettant une augmentation considérable de la surface de contact gaz/liquide tel que décrit ci-avant pour la section 16. Le gaz lavé passe ensuite de préférence à travers un séparateur de gouttes 30, p.ex. un séparateur à lamelles ou à tissus avant d'être émis à l'atmosphère par la sortie 3. Il est à noter que le lavage alcalin ne sert pas seulement à neutraliser des restants d'acide, mais aussi à éliminer surtout des restants d'oxydes d'azote encore présents dans le gaz entrant au piquage d'entrée 20.

En fin d'opération on dispose donc de deux bains liquides résiduaires 2 et 8, l'un étant acide, l'autre alcalin et qui donc ne peuvent pas être rejetés comme tel. Dans certains cas il peut alors être utile de mélanger ces deux solutions résiduaires en vue d'une opération périodique ou finale de neutralisation mutuelle. La solution acide est alors pompé par la conduite 21 et la solution alcaline par la conduite 22 dans un récipient 18 où ils sont mélangés. Ce traitement additionnel de neutralisation fait donc appel à une technique simple et peu onéreuse, et le traitement global résulte alors dans une opération ne laissant pas de déchets nuisibles. Quand le mélange dans le récipient 18 contient encore des nitrites, ceux-ci devraient être transformés en nitrates par oxydation. Un agent oxydant est alors ajouté au récipient 18 par des moyens d'introduction 31.

__Exemple 1__

Un effluent gazeux contenant 120 ppm d'oxydes d'azote était traité avec le système de lavage acide et alcalin en cascade comme décrit ci-dessus. Le débit du courant de gaz 1 à l'entrée du laveur 9 était de 8000 $m^3$/h. La solution acide/urée initiale présentait un pH de 0,75 et contenait 300 g/l d'urée. Sa température à l'endroit du pulvérisation 13 était de 30°C. Le débit de circulation de la solution acide/urée était de 35.000 l/h. Le lit d'anneaux de remplissage 16 permettait un temps de séjour de 2,5 à 3 sec. A la sortie 19 du laveur acide 9 la concentration en oxydes d'azote était déjà tombé à 18 ppm ce qui correspond à un rendement de 85 %. Le laveur alcalin 10 comprenait un lit 29 d'anneaux de remplissage identique au lit 16. La solution d'hydroxyde de sodium présentait un pH de 13 et elle était débitée par le pulvérisateur 28 à 35.000 l/h. A la sortie 3 du laveur alcalin 10 la concentration en oxydes d'azote avait encore diminuée au niveau de 7 ppm. L'efficacité du lavage alcalin s'élève donc à environ 60 % et le rendement total du système global s'élève à 95 %.

__Exemple 2__

L'effluent gazeux à épurer était chargé de 6000 à 7000 ppm d'oxydes d'azote. Il était traité dans les mêmes conditions que celui de l'exemple 1. A la sortie 19 de la tour de lavage acide la concentration avait diminuée jusqu'à 900 - 1000 ppm ce qui indique encore un rendement d'environ 85 %. A la sortie du laveur alcalin 10, la concentration en oxydes d'azote avait tombée jusqu'à 500 ppm ce qui revient à un rendement d'environ 47 %. L'efficacité globale s'élève donc ici à environ 92 %.

REVENDICATIONS :

1. Procédé de traitement d'effluents gazeux contenant des oxydes d'azote comprenant une opération de traitement des effluents gazeux par un liquide de lavage acide contenant de l'urée à une température entre 30° et 60°C caractérisé en ce qu'il comprend une seconde opération de traitement des effluents gazeux provenant dudit lavage acide par un second liquide de lavage alcalin.

2. Procédé selon la revendication 1 caractérisé en ce que le liquide de lavage acide comprend environ de 50 à 500 g d'urée par litre.

3. Procédé selon la revendication 2 caractérisé en ce que le liquide de lavage acide a un pH entre 0 et 1,5.

4. Procédé selon la revendication 3 caractérisé en ce que le liquide de lavage a un pH entre 0,5 et 1.

5. Procédé selon l'une ou l'autre des revendications 1 à 3 caractérisé en ce que le liquide de lavage alcalin a un pH de 11 à 14.

6. Procédé selon l'une ou l'autre des revendications précédentes caractérisé en ce que les liquides résiduaires acides et alcalins sont mélangés en vue d'un traitement de neutralisation.

7. Procédé selon la revendication 6, caractérisé en ce que l'on ajoute un agent oxydant au mélange pour transformer les nitrites présents en nitrates.

8. Dispositif de traitement de effluents gazeux contenant des oxydes d'azote comprenant un appareil laveur (9) pourvu d'une entrée (1) pour l'effluent gazeux, des moyens d'alimentation (4) et de distribution (13) d'un liquide de lavage acide contenant de l'urée, d'une cuve (2) de collection du liquide de lavage sortant de l'appareil (9) et d'une conduite (19) d'évacuation de l'effluent gazeux caractérisé en ce que la conduite (19) est reliée à une entrée (20) d'un second appareil laveur (10) qui est pourvu d'un moyen d'alimentation (5) et de distribution (28) d'un liquide de lavage alcalin, d'une sortie (3) pour l'évacuation de l'effluent gazeux épuré et d'une cuve (8) de collection de ce liquide de lavage sortant de cet appareil (10), ladite cuve (8) étant pourvue de moyens (23, 25, 26, 27) de conditionnement et de moyens (24) de recirculation du liquide alcalin.

9. Dispositif selon la revendication 8 caractérisé en ce que le laveur (10) comprend en outre des moyens (29) d'activation de la mise-en-contact des phases liquides et gazeuses.

10. Dispositif selon la revendication 8 ou 9 caractérisé en ce que le laveur (10) comprend en outre en aval des moyens de distribution (28) et des moyens d'activation de mise en contact (29) des moyens (30) de séparation de gouttes.

11. Dispositif selon l'une ou l'autre des revendications précédentes caractérisé en ce qu'il comprend en outre un récipient de neutralisation (18) pourvue des moyens de connection (21) avec la cuve (2) du liquide de lavage acide d'une part et des moyens de connections (22) avec la cuve (8) du liquide de lavage alcalin d'autre part.

*11. Dispositif selon l'une ou l'autre des revendications précédentes caractérisé en ce qu'il comprend en outre un récipient de neutralisation (18) pourvue des moyens de connection (21) avec la cuve (2) du liquide de lavage acide d'une part et des moyens de connections (22) avec la cuve (8) du liquide de lavage alcalin d'autre part.*

*12. Dispositif selon la revendication 11 caractérisé en ce que le récipient (18) est pourvu en outre des moyens d'introduction (31) d'un agent oxydant.*

0217437

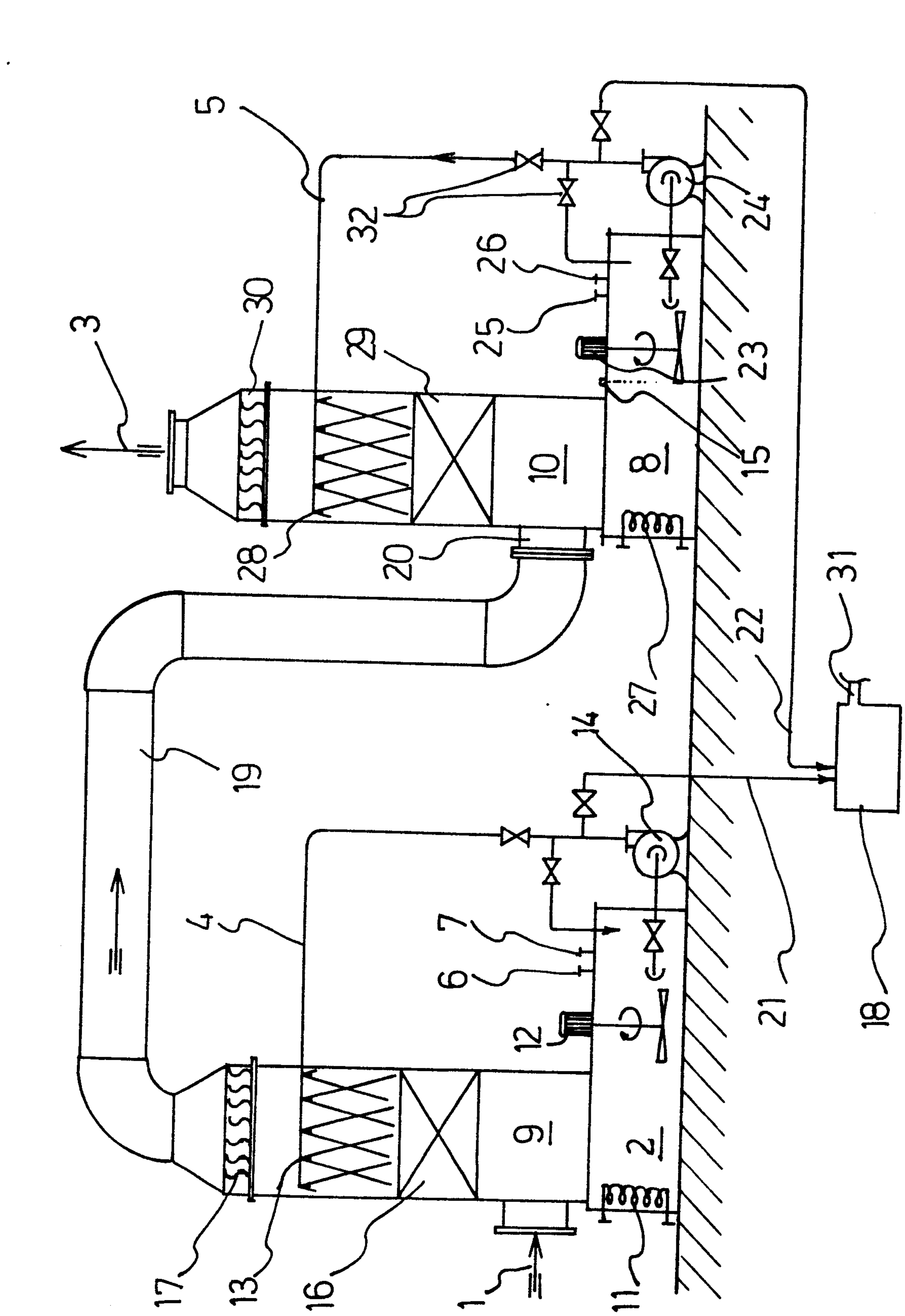
1
2
3
4
5
6
7
8
9
10
11
12
13
14
15
16
17
18
19
20
21
22
23
24
25
26
27
28
29
30
31
32

Office européen des brevets

# RAPPORT DE RECHERCHE EUROPEENNE

Numéro de la demande 0217437

EP 86 20 1521

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 565 575 (ABE WARSHAW) * Revendications * | 1 | B 01 D 53/34 |
| A | | 2-5 | |
| | --- | | |
| Y | CHEMICAL ABSTRACTS, vol. 82, no. 18, 5 mai 1975, page 256, résumé no. 115640u, Columbus, Ohio, US; & JP-A-74 119 858 (KATSUSHIMA, AKIRA et al.) 15-11-1974 * Résumé * | 1 | |
| | --- | | |
| A | US-A-4 400 362 (B.J. LERNER) * Figures 1,2B; colonne 8, ligne 12 - colonne 11, ligne 14 * | 1,8 | |
| | --- | | DOMAINES TECHNIQUES RECHERCHES (Int. Cl.4) |
| A | FR-A-2 162 573 (MATSUSHITA ELECTRONICS CORP.) | | B 01 D 53/00 |
| | ----- | | |

Le présent rapport de recherche a été établi pour toutes les revendications

| Lieu de la recherche | Date d'achèvement de la recherche | Examinateur |
|---|---|---|
| LA HAYE | 01-12-1986 | BOGAERTS M.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82